# EUROPÄISCHE PATENTANMELDUNG

(11) **EP 1 329 298 A2**
(43) Veröffentlichungstag der Anmeldung: **23.07.2003**
(21) Anmeldenummer: 02028226.5
(22) Anmeldetag: 16.12.2002
(51) Int. Cl.: B29C 44/44, B29C 44/34

(54) **Vorrichtung zur Herstellung von Schaumstoff-Formkörpern**

(30) Priorität: 18.01.2002 DE 10202042
(71) Anmelder: BASF AKTIENGESELLSCHAFT, 67056 Ludwigshafen (DE)
(72) Erfinder: Hund, Joachim, 67487 St. Martin (DE); Dillmann, Peter, 76865 Insheim (DE)

(57) **Zusammenfassung**

Die Erfindung betrifft eine Vorrichtung und ein Verfahren zur Herstellung von Schaumstoff-Formkörpern durch Versintern von vorgeschäumten Kunststoffteilchen mittels Heißdampf in einem Formwerkzeug (5,6), welches in einer Dampfkammer (1,2) angeordnet ist, in die der Heißdampf eingeleitet wird und von dort durch Düsen in das Formwerkzeug eindringt. Die Innenwände der Dampfkammer sind mit einem gehärteten Epoxidharz (B) beschichtet.

## Beschreibung

Die Erfindung betrifft eine Vorrichtung und ein Verfahren zur Herstellung von Schaumstoff-Formkörpern durch Versintern von vorgeschäumten Kunststoffteilchen mittels Heißdampf in einem mehrteiligen Formwerkzeug, welches in einer Dampfkammer angeordnet ist, in die der Heißdampf eingeleitet wird und von dort durch Düsen in das Formwerkzeug eindringt.

Dieses Verfahren wird in technischem Maßstab zur Herstellung von Schaumstoff-Formkörpern, z.B. auf Basis von Polystyrol (EPS) und Polypropylen (EPP) angewandt. Dabei wird Dampf, der im Fall von EPS 100°C und bei EPP etwa 150°C heiß ist, in die Dampfkammer eingeleitet und dringt von dort durch schmale Düsen in das Innere des Formwerkzeugs ein, wo es das Aufschäumen und Versintern der vorher unter Druck eingefüllten vorgeschäumten Teilchen bewirkt. Nach beendeter Versinterung wird der Blähdruck abgebaut und die Außenwände des Formwerkzeugs werden durch Besprühen mit Wasser abgekühlt, das Formwerkzeug wird geöffnet und das fertige Formteil entnommen.

Die Wände der Dampfkammer bestehen im allgemeinen aus gut wärmeleitendem Metall. Beim Bedampfen nehmen diese Wände verhältnismäßig viel Wärme auf, die sie beim Abkühlen an das Kühlwasser abgeben. Dadurch entsteht ein hoher Energieverlust. Um diesen zu vermindern, wurden schon verschiedene Maßnahmen ergriffen. Bei der Herstellung von Formteilen aus EPS kann man an der Innenwand der Dampfkammer Gummimatten aufvulkanisieren. Diese sind jedoch bei EPP nicht ausreichend wärmebeständig. Es wurde auch schon vorgeschlagen, an den Dampfkammerwänden Platten aus wärmedämmenden Materialien, z.B. aus Keramik oder aus Kunststoff anzubringen. Dies ist jedoch wegen der unebenen Wandungen schwierig und es entstehen immer wieder Wärmebrücken. Bei einer Beschichtung der Innenwände mit Keramik besteht die Gefahr, daß diese infolge des ständigen Temperaturwechsels abplatzt. Der Erfindung lag daher die Aufgabe zugrunde diese Nachteile zu vermeiden.

Es wurde nun gefunden, daß eine hervorragende Wärmedämmung dann erhalten wird, wenn die Innenwände der Dampfkammer mit einem gehärteten Epoxidharz beschichtet sind. Im Gegensatz zu andersartigen Kunststoffbeschichtungen sind Epoxidharze temperatur- und hydrolysebeständig und reißen oder platzen auch bei starken Temperaturschwankungen nicht. Die Epoxidharze sind vorzugsweise mit anorganischen Füllstoffen, z.B. Silikaten, Oxiden oder Carbonaten gefüllt und weisen dann Dichten von mehr als 1,5 g/cm³, insbesondere von 2,0 bis 3,0 g/cm³ auf. Die Beschichtung ist zweckmäßigerweise 200 bis 2000 µm, vorzugsweise 500 bis 1200 µm dick. sie wird dadurch hergestellt, daß man auf die Innenwände die Vormischung eines Epoxidharzen, z.B. auf Basis von Bisphenolen, Novolake oder Diolen, mit einem Härter, z.B. auf Basis von Diaminen, aufbringt. Dies kann mittels Rakeln, Spachteln oder groben Pinseln geschehen. Nach dem Auftrag läßt man das Epoxidharz aushärten, was durch Erwärmen beschleunigt werden kann.

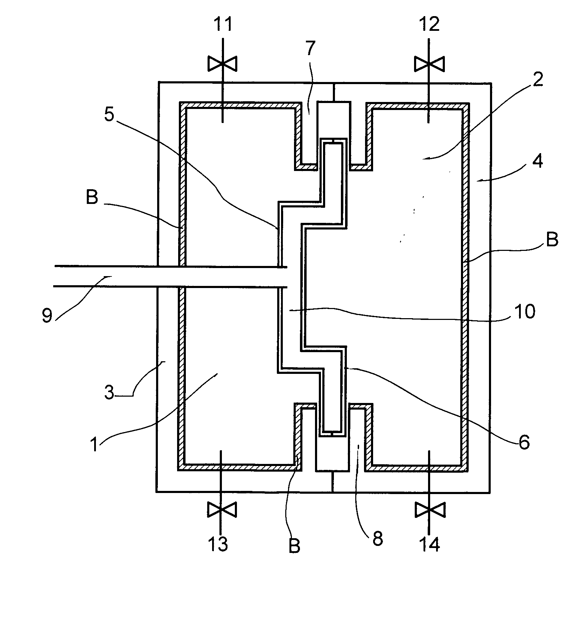

Die Figur zeigt eine Skizze der erfindungsgemäßen Vorrichtung.
Mit 1 und 2 sind die beiden Hälften der Dampfkammer bezeichnet, mit 3 und 4 deren Innenwände, nämlich die Füllerplatte 3 und die Abstützplatte 4. 5 und 6 sind die beiden Hälften des Formwerkzeugs, das durch Werkzeugaufspannplatten 7 und 8 gehalten wird. Dampfkammerinnenwände und Werkzeugaufspannplatten sind erfindungsgemäß mit dem gehärteten Epoxidharz B beschichtet. Durch den Einfüllinjektor 9 werden die vorgeschäumten Kunststoffteilchen in das Innere 10 des Formwerkzeugs eingefüllt, vorzugsweise unter Druck. Dann wird erst das Dampfzufuhrventil 11 und das Kondensatventil 14 geöffnet, so daß Dampf in die eine Dampfkammerhälfte 1 einströmen, durch -nicht eingezeichnete- Düsen in das Formwerkzeug eindringen, aus diesem in die andere Dampfkammerhälfte 2 wieder austreten und -teilweise als Kondensat- durch das Kondensatventil 14 abfließen kann. Diese Prozedur wird durch öffnen des Dampfzufuhrventils 12 und des Kondensatventils 13 wiederholt, wobei der Dampfstrom durch das Formwerkzeug in entgegengesetzter Richtung verläuft. Der Heißdampf bewirkt, daß die vorgeschäumten Kunststoffteilchen zunächst weiter expandieren, die in den Zwikkel befindliche Luft verdrängen und schließlich zum Schaumstoff-Formkörper versintern. Danach wird der Blähdruck abgebaut und durch -nicht eingezeichnete- Düsen wird Kühlwasser an das Formwerkzeug gesprüht, so daß dieses abkühlt und geöffnet werden kann. Schließlich wird der fertige Formkörper entnommen.

Das erfindungsgemäße Verfahren kann zur Herstellung von Schaumstoff-Formkörpern aus thermoplastischen Kunststoffen, z.B. Polyolefinen und Styrolpolymerisaten angewandt werden; mit besonderem Vorteil bei Propylenpolymerisaten, wobei die vorgeschäumten EPP-Teilchen vorzugsweise eine Schüttdichte von 10 bis 200 g/l aufweisen.

## Patentansprüche

1. Vorrichtung zur Herstellung von Schaumstoff-Formkörpern durch Versintern von vorgeschäumten Kunststoffteilchen mittels Heißdampf in einem mehrteiligen Formwerkzeug, welches in einer Dampfkammer angeordnet ist, in die der Heißdampf eingeleitet wird und von dort durch Düsen in das Formwerkzeug eindringt,
**dadurch gekennzeichnet, daß** die Innenwände der Dampfkammer zur Wärmedämmung mit einem gehärteten Epoxidharz beschichtet sind.

2. Vorrichtung nach Anspruch 1, **dadurch gekennzeichnet, daß** das Epoxidharz mit einem anorganischen Füllstoff gefüllt ist und eine Dichte von mehr als 1,5 g/cm³ aufweist.

3. Vorrichtung nach Anspruch 1, **dadurch gekennzeichnet, daß** die Epoxidharzbeschichtung eine Dicke von 200 bis 2000 µm aufweist.

4. Verfahren zur Herstellung von Schaumstoff-Formkörpern durch Versintern von vorgeschäumten Kunststoff-Teilchen, **dadurch gekennzeichnet, daß** das Versintern in einer Vorrichtung nach Anspruch 1 durchgeführt wird.

5. Verfahren nach Anspruch 4, **dadurch gekennzeichnet, daß** vorgeschäumte Polypropylenpartikel mit einer Schüttdichte von 10 bis 200 g/l versintern werden.

6. Verfahren nach Anspruch 4, **dadurch gekennzeichnet, daß** vorgeschäumte Polystyrolpartikel versintert werden.

7. Verfahren nach Anspruch 4, **dadurch gekennzeichnet, daß** vorgeschäumte Polyethylenpartikel versintert werden.
